# EUROPEAN PATENT SPECIFICATION

(11) **EP 1 886 600 B1**
(45) Date of publication and mention of the grant of the patent: **03.03.2010**
(21) Application number: 07104712.0
(22) Date of filing: 22.03.2007
(51) Int. Cl.: A47C 19/02, F16B 12/02, F16B 12/60

(54) **Bed structure and assembly kit**
Bettstruktur und Montagesatz
Cadre de lit et kit d'assemblage

(30) Priority: 07.08.2006 IT MI20060289
(43) Date of publication of application: 13.02.2008
(73) Proprietor: RETI GRITTI S.p.A., I-25030 Castelcovati (Brescia) (IT)
(72) Inventor: Marini, Giuliano, 25030, Castelcovati (Brescia) (IT)
(74) Representative: Crippa, Paolo Ernesto

(56) References cited:
- DE-U- 1 974 191
- FR-A- 622 249
- US-A- 2 132 131
- US-A- 5 694 656
- US-B1- 6 862 758

## Description

The object of the present innovation is a bed structure, and in particular a structure comprising a headboard, that is, a frame usually arranged on the side where a bed user's head is placed, a footboard, that is, a frame usually arranged on the side where a bed user's feet are placed, and side members that connect the headboard to the footboard. Headboard and footboard are each usually comprised of two vertical columns, intended for resting on the floor, and a central portion, connected to the two columns.

For obvious problems of space, it is well known how a bed structure is usually carried in separate parts. Once purchased by a buyer, assembly is carried out by the buyer himself/herself or by fitters, directly into the bedroom.

For wooden structures, on the vertical columns the headboard is usually provided with two or more holes, whereas the side members at the ends thereof are provided with respective projecting pins, suitable for being inserted into the column holes, for obtaining the assembledstructure.

A similar structure is disclosed in US 2,132,131, where the side member is coupled to the footboard/headboard through engaging the projections on the plate of the side member with the slots formed in the footboard/headboard.

For iron structures, for example wrought iron, which are currently becoming widespread again, the side member is fixed to the vertical columns by an L shaped flange and screws.

In this latter case, fixing is not always easy: it is difficult to obtain good alignment between the parts, the screws are subject to loosening, sometimes the thread gets damaged, the structure is not very firm, and other disadvantages.

The object of the present innovation is to provide a bed structure for which the side members are connected to the headboard and/or to the footboard in a simple and quick manner and such as to ensure high stability and solidity to the structure itself.

Such object is achieved by a bed structure according to the following claim 1. The dependent claims describe embodiment variations. Moreover, such object is achieved by an assembly kit according to claim 11 and a method for making a bed structure according to claim 13

The features and advantages of the bed structure according to the present innovation will appear more clearly from the following description, made by way of an indicative and non-limiting example with reference to the following figures, wherein:

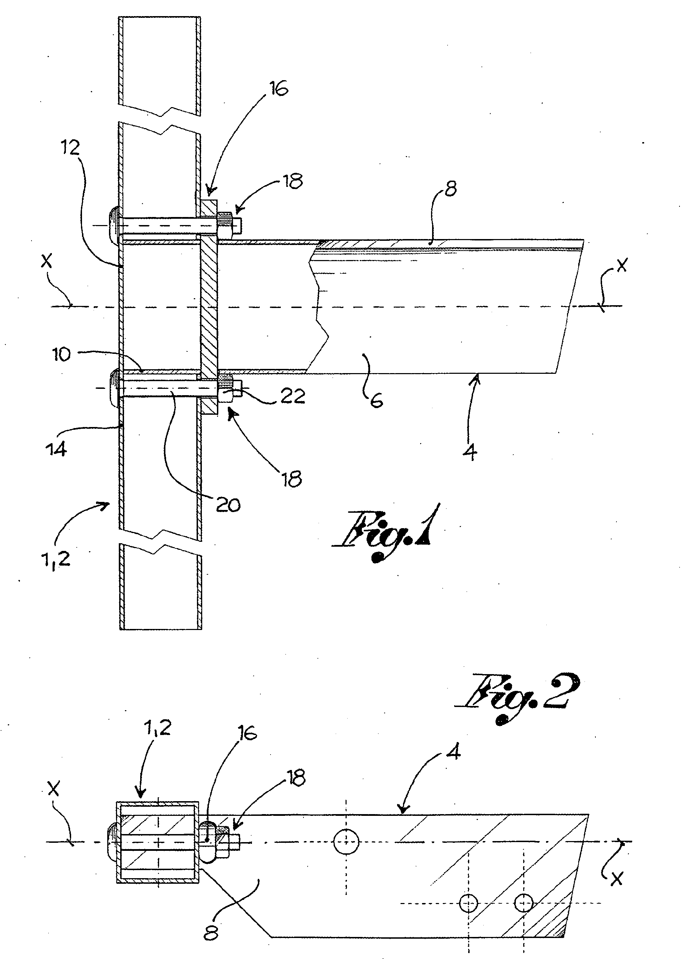

- figure 1 shows a side partial section view of a vertical column and of a side member, connected according to the present innovation;

- figure 2 shows a top view of the column and of the side member of figure 1; and

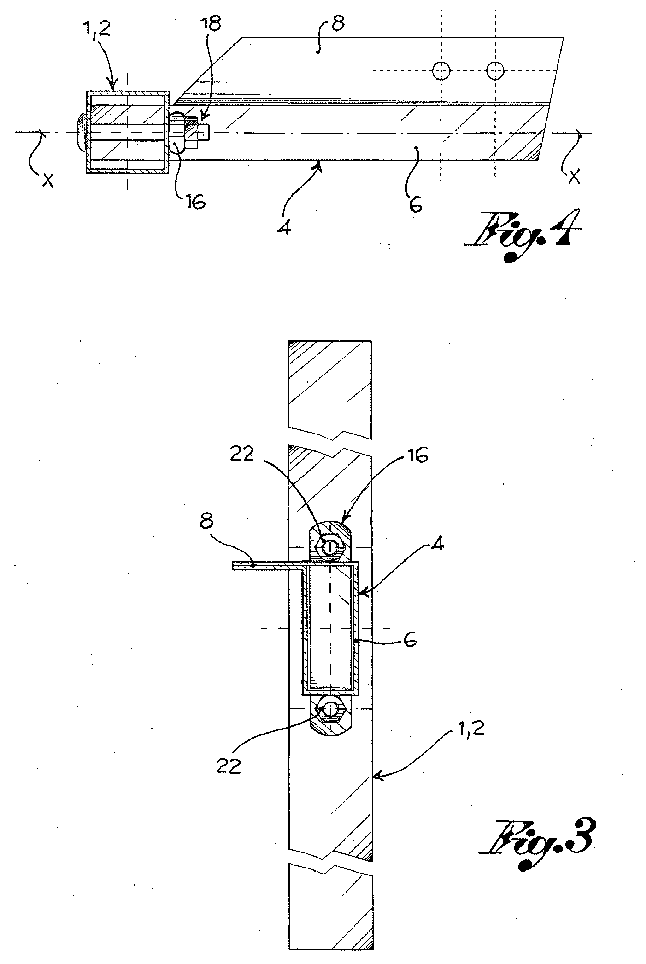

- figure 3 shows a front view from the side of the side member of the column and of the side member of figure 1, and

- figure 4 shows a bottom view of the column and of the side member of figure 1.

According to the present invention, a bed structure comprises a headboard, a footboard and a pair of side members.

The headboard comprises a central portion and a pair of vertical columns 1, intended for resting on the floor for making the bed front legs. Likewise, the footboard comprises a central portion and a pair of vertical columns 2, intended for resting on the floor for making the bed back legs.

Preferably, vertical columns 1, 2 have a box shaped structure, for example with square or rectangular section.

Side members 4 are shaped as elongated elements mainly along a longitudinal axis X-X.

Preferably, side members 4 consist of a box shaped structure 6, for example of square or rectangular section, from which a side wing 8 protrudes, which extends by the entire extension of the side member, suitable for supporting a sprung bed base.

Vertical column 1, 2 exhibits a slit suitable for inserting an end portion 10 of side member 4. The slit is longitudinally blind, delimited by a portion 12 of an abutment wall 14 of vertical column 1, 2.

The end portion 10 of side member 4 is inserted in the slit of vertical column 1, 2 up to abutting on portion 12 of the abutment wall 14 of vertical column 1, 2.

Moreover, the bed structure comprises fixing means, preferably releasable, suitable for fixing the side member to the headboard and/or to the footboard, and in particular to the vertical column thereof.

In particular, side member 4, in the proximity of the longitudinal end, exhibits a through vertical hole for cooperating with said fixing means.

According to a preferred embodiment, the fixing means comprise a plate 16 suitable for being inserted into the vertical hole of side member 4, so that a portion thereof remains protruding from the side member itself.

Moreover, said fixing means comprise at least a bolt 18, consisting of a pin 20 and a nut 22.

Pin 20 of bolt 18 is longitudinally inserted through vertical column 1, 2 and moreover, it crosses plate 16. Nut 22 is screwed to pin 20, so as to close plate 16 and vertical column 1, 2 pack-wise.

Preferably, the dimensions of the parts are selected so that, by tightening the nut on the pin, side member 4 is brought in abutment inside vertical column 1, 2, against portion 12 of the abutment wall 14.

According to a preferred embodiment, said fixing means comprise a pair of bolts 18 arranged one on and the other under said side member.

The present innovation makes the construction of a bed structure especially convenient and safe, starting from an assembly kit, put on sale, wherein the parts are separate, comprising the headboard, the footboard, the pair of side members and the plates. Preferably, also the headboard and/or the footboard are disassembled, that is, the vertical columns are separate from the central portions.

Innovatively, the bed structure described above allows obtaining a firm and steady structure, easy and quick to assemble.

## Claims

1. A bed structure comprising:
- a cross headboard, intended for being arranged on the side where the bed user's head is placed;
- a cross footboard, intended for being arranged on the side where the bed user's feet are placed;
- a pair of side members (4), having prevailing extension along a longitudinal axis (X-X), coupled at the respective ends to said headboard and to said footboard and transversally spaced from each other;
- fixing means suitable for fixing said side member to said headboard and/or to said footboard;
wherein said headboard and/or said footboard exhibit a slit wherein an end portion (10) of said side member is inserted, fixed to said headboard and/or footboard through said fixing means,
wherein said side member exhibits a through vertical hole for cooperating with said fixing means
said structure being **characterized in that** said fixing means comprise a plate (16) inserted in said vertical hole of the side member, partly protruding therefrom, and at least one bolt (18), coupled to the headboard and/or to the footboard and to said portion protruding from the plate.

2. A structure according to claim 1, wherein said slit is longitudinally blind, closed by a portion (12) of an abutment wall (14) of the headboard and/or of the footboard.

3. A structure according to claim 2, wherein the side board is in longitudinal abutment against said portion of the abutment wall.

4. A structure according to any one of the preceding claims, wherein said fixing means comprise a pair of bolts, arranged one on and the other under said side member.

5. A structure according to any one of the previous claims, wherein said headboard comprises a central portion and vertical columns (1), intended for resting on the floor, said slit being obtained in said vertical column.

6. A structure according to any one of the previous claims, wherein said footboard comprises a central portion and vertical columns (2), intended for resting on the floor, said slit being obtained in said vertical column.

7. A structure according to claim 5 or 6, wherein said vertical columns exhibit a box-shaped structure.

8. A structure according to any one of claims 5 to 7,
wherein said vertical columns exhibit quadrangular section, for example square or rectangular.

9. A structure according to any one of the previous claims, wherein said side member exhibits quadrangular section, for example square or rectangular.

10. A structure according to any one of the previous claims, wherein said side member exhibits a box-shaped structure.

11. An assembly kit for making a bed structure, comprising:
- a headboard comprising a central portion and a first pair of vertical columns;
- a footboard comprising a central portion and a second pair of vertical columns;
- a pair of side members connectable at the ends to said headboard and said footboard;
- a plurality of plates;
- a plurality of bolts;
wherein said vertical columns exhibit each a slit suitable for the introduction of said side member and a pair of holes suitable for the introduction of said bolts, and
wherein said side members exhibit a hole for the introduction of said plates, and
wherein said plates exhibit holes for the connection to said bolts.

12. A kit according to claim 11, wherein said central portions of said headboard and/or said footboard are separate from said vertical columns.

13. A method for making a bed structure starting from the assembly kit according to claim 11 or 12, comprising the following steps:
- inserting a side member in a slit of a vertical column;
- inserting a plate in a through hole of the side member;
- inserting a pin of a bolt through said Vertical column and said plate;
- screwing a nut of said bolt on said pin, closing said plate and said vertical column pack-wise.

## Patentansprüche

1. Bettstruktur, die umfasst:
- ein querlaufendes Kopfteil, das dafür gedacht ist, auf der Seite angeordnet zu werden, wo der Kopf des Bettnutzers platziert wird;
- ein querlaufendes Fußteil, das dafür gedacht ist, auf der Seite angeordnet zu werden, wo die Füße des Bettnutzers platziert werden;
- ein Paar von Seitenelementen (4) mit einer vorherrschenden Ausdehnung entlang einer Längsachse (X-X), das an den jeweiligen Enden mit dem Kopfteil und dem Fußteil verbunden ist und in der Querrichtung voneinander beabstandet ist;
- Befestigungsmittel, die geeignet sind, um das Seitenelement an dem Kopfteil und/oder dem Fußteil zu befestigen;
wobei das Kopfteil und/oder das Fußteil einen Schlitz aufweisen, in den ein Endabschnitt (10) des Seitenelements eingesetzt ist und an dem Kopfteil und/oder dem Fußteil durch Befestigungsmittel befestigt ist,
wobei das Seitenelement ein vertikales Durchgangsloch aufweist, um mit dem Befestigungsmittel zusammenzuwirken,
wobei die Struktur **dadurch gekennzeichnet ist, dass** die Befestigungsmittel eine Platte (16), die in das vertikale Loch des Seitenelements eingesetzt ist und teilweise daraus vorsteht, und wenigstens einen Bolzen (18) umfassen, der mit dem Kopfteil und/oder dem Fußteil und mit dem von der Platte vorstehenden Abschnitt verbunden ist.

2. Struktur nach Anspruch 1, wobei der Schlitz längs verdeckt und von einem Abschnitt (12) einer Anschlagwand (14) des Kopfteils und/oder des Fußteils verschlossen ist.

3. Struktur nach Anspruch 2, wobei das Seitenteil längs an dem genannten Abschnitt der Anschlagwand anliegt.

4. Struktur nach einem der vorangehenden Ansprüche, wobei die Befestigungsmittel ein Paar Bolzen umfassen, von denen einer auf und der andere unter dem Seitenelement angeordnet ist.

5. Struktur nach einem der vorangehenden Ansprüche, wobei das Kopfteil einen Mittelabschnitt und vertikale Säulen (1) hat, die dafür gedacht sind, auf dem Boden zu lagern, wobei der Schlitz in der vertikalen Säule erzielt ist.

6. Struktur nach einem der vorangehenden Ansprüche, wobei das Fußteil einen Mittelabschnitt und vertikale Säulen (2) umfasst, die dafür gedacht sind, auf dem Boden zu lagern, wobei der Schlitz in der vertikalen Säule erzielt ist.

7. Struktur nach Anspruch 5 oder 6, wobei die vertikalen Säulen eine kastenförmige Struktur aufweisen.

8. Struktur nach einem der Ansprüche 5 bis 7, wobei die vertikalen Säulen einen viereckigen Schnitt, zum Beispiel quadratisch oder rechteckig, aufweisen.

9. Struktur nach einem der vorangehenden Ansprüche, wobei das Seitenelement einen viereckigen Schnitt, zum Beispiel quadratisch oder rechteckig, aufweist.

10. Struktur nach einem der vorangehenden Ansprüche, wobei das Seitenelement eine kastenförmige Struktur aufweist.

11. Montagesatz zum Herstellen einer Bettstruktur, der umfasst:
- ein Kopfteil, das einen Mittelabschnitt und ein erstes Paar vertikaler Säulen umfasst,
- ein Fußteil, das einen Mittelabschnitt und ein zweites Paar vertikaler Säulen umfasst;
- ein Paar von Seitenelementen, die an den Enden mit dem Kopfteil und dem Fußteil verbindbar sind;
- eine Vielzahl von Platten;
- eine Vielzahl von Bolzen;
wobei die vertikalen Säulen jeweils einen Schlitz, der für die Einführung des Seitenelements geeignet ist, und ein Paar Löcher aufweisen, die für die Einführung der Bolzen geeignet sind, und
wobei die Seitenelemente ein Loch für die Einführung der Platten aufweisen, und
wobei die Platten Löcher für die Verbindung mit den Bolzen aufweisen.

12. Montagesatz nach Anspruch 11, wobei die Mittelabschnitte des Kopfteils und/oder des Fußteils getrennt von den vertikalen Säulen sind.

13. Verfahren zum Herstellen einer Bettstruktur ausgehend von dem Montagesatz nach Anspruch 11 oder 12, das die folgenden Schritte umfasst:
- Einsetzen eines Seitenelements in einen Schlitz einer vertikalen Säule;
- Einsetzten einer Platte in ein Durchgangsloch des Seitenelements;
- Einsetzen eines Stifts eines Bolzens durch die vertikale Säule und die Platte;
- Schrauben einer Mutter des Bolzens auf den Stift, wobei die Platte und die vertikalen Säule sich packenweise nähern.

## Revendications

1. Structure de lit comprenant:
- une tête de lit transversale destinée à être disposée du côté où la tête de l'utilisateur du lit est placée;
- un pied de lit transversal destiné à être disposé du côté où les pieds de l'utilisateur du lit sont placés;
- une paire d'éléments latéraux (4), ayant une extension prévalente le long d'un axe longitudinal (X-X), couplés aux extrémités respectives à ladite tête de lit et audit pied de lit et espacés transversalement l'un de l'autre;
- des moyens de fixation appropriés pour fixer ledit élément latéral à ladite tête de lit et/ou audit pied de lit;
dans laquelle ladite tête de lit et/ou ledit pied de lit présentent une fente dans laquelle une partie d'extrémité (10) dudit élément latéral est insérée, fixée à ladite tête de lit et/ou audit pied de lit par lesdits moyens de fixation,
dans laquelle ledit élément latéral présente un trou vertical traversant pour coopérer avec lesdits moyens de fixation
ladite structure étant **caractérisée en ce que** lesdits moyens de fixation comprennent une plaque (16) insérée dans ledit trou vertical de l'élément latéral, en faisant en partie saillie de celui-ci, et au moins un boulon (18), couplé à la tête de lit et/ou au pied de lit et à ladite partie faisant saillie de la plaque.

2. Structure selon la revendication 1, dans laquelle ladite fente est longitudinalement borgne, fermée par une partie (12) d'une paroi de butée (14) de la tête de lit et/ou du pied de lit.

3. Structure selon la revendication 2, dans laquelle le panneau latéral est en butée longitudinale contre ladite partie de la paroi de butée.

4. Structure selon l'une quelconque des revendications précédentes, dans laquelle lesdits moyens de fixation comprennent une paire de boulons, disposés l'un au-dessus et l'autre en dessous dudit élément latéral.

5. Structure selon l'une quelconque des revendications précédentes, dans laquelle ladite tête de lit comprend une partie centrale et des colonnes verticales (1), destinées à reposer sur le sol, ladite fente étant ménagée dans ladite colonne verticale.

6. Structure selon l'une quelconque des revendications précédentes, dans laquelle ledit pied de lit comprend une partie centrale et des colonnes verticales (2), destinées à reposer sur le sol, ladite fente étant ménagée dans ladite colonne verticale.

7. Structure selon la revendication 5 ou 6, dans laquelle lesdites colonnes verticales présentent une structure en forme de caisson.

8. Structure selon l'une quelconque des revendications 5 à 7, dans laquelle lesdites colonnes verticales présentent une section quadrangulaire, par exemple carrée ou rectangulaire.

9. Structure selon l'une quelconque des revendications précédentes, dans laquelle ledit élément latéral présente une section quadrangulaire, par exemple carrée ou rectangulaire.

10. Structure selon l'une quelconque des revendications précédentes, dans laquelle ledit élément latéral présente une structure en forme de caisson.

11. Kit d'assemblage pour fabriquer une structure de lit, comprenant:
- une tête de lit comprenant une partie centrale et une première paire de colonnes verticales;
- un pied de lit comprenant une partie centrale et une seconde paire de colonnes verticales;
- une paire d'éléments latéraux pouvant être raccordés aux extrémités de ladite tête de lit et dudit pied de lit;
- une pluralité de plaques;
- une pluralité de boulons;
dans lequel lesdites colonnes verticales présentent chacune une fente convenant à l'introduction dudit élément latéral et une paire de trous convenant à l'introduction desdits boulons, et
dans lequel lesdits éléments latéraux présentent un trou pour l'introduction desdites plaques, et
dans lequel lesdites plaques présentent des trous pour la liaison auxdits boulons.

12. Kit selon la revendication 11, dans lequel lesdites parties centrales de ladite tête de lit et/ou dudit pied de lit sont séparées desdites colonnes verticales.

13. Procédé pour réaliser une structure de lit en partant du kit d'assemblage selon la revendication 11 ou 12, comprenant les étapes consistant à:
- insérer un élément latéral dans une fente d'une colonne verticale;
- insérer une plaque dans un trou traversant de l'élément latéral;
- insérer une vis d'un boulon à travers ladite colonne verticale et ladite plaque; et
- visser un écrou dudit boulon sur ladite vis, en serrant de façon empilée ladite plaque et ladite colonne verticale.
